# EUROPÄISCHE PATENTSCHRIFT

(11) **EP 0 723 713 B1**
(45) Veröffentlichungstag und Bekanntmachung des Hinweises auf die Patenterteilung: **13.08.1997**
(21) Anmeldenummer: 94930161.8
(22) Anmeldetag: 11.10.1994
(51) Int. Cl.: H01R 43/02, B23K 20/10

(54) **VERFAHREN UND VORRICHTUNG ZUM KOMPAKTIEREN UND ANSCHLIESSENDEN SCHWEISSEN VON ELEKTRISCHEN LEITERN**
PROCESS AND DEVICE FOR COMPACTING AND SUBSEQUENTLY WELDING ELECTRIC CONDUCTORS
PROCEDE ET DISPOSITIF POUR LE COMPACTAGE ET LE SOUDAGE SUBSEQUENT DE CONDUCTEURS ELECTRIQUES

(30) Priorität: 14.10.1993 DE 4335108
(43) Veröffentlichungstag der Anmeldung: 31.07.1996
(73) Patentinhaber: SCHUNK Ultraschalltechnik GmbH, D-35435 Wettenberg (DE)
(72) Erfinder: STEINER, Ernst, D-35452 Heuchelheim (DE); STROH, Dieter, D-35435 Wettenberg (DE); GÖTZ, Heinz, D-35287 Amöneburg (DE)
(74) Vertreter: Stoffregen, Hans-Herbert, Dr. Dipl.-Phys.
(86) Internationale Anmeldenummer: EP9403343
(87) Internationale Veröffentlichungsnummer: WO9510866

(56) Entgegenhaltungen:
- EP-A- 0 286 975
- DE-C- 3 719 083
- GB-A- 2 171 945
- US-A- 4 826 067

## Beschreibung

Die Erfindung bezieht sich auf ein Verfahren zum Kompaktieren und anschließenden Verschweißen von elektrischen Leitern, insbesondere zur Herstellung von Durchgangsoder Endknoten von Litzen, mittels Ultraschall in einem an die Leiter anpassbaren, in Höhe und Breite verstellbaren Verdichtungsraum, wobei die zu verschweißenden Leiter zunächst kompaktiert und sodann verschweißt werden.

Ferner bezieht sich die Erfindung auf eine Vorrichtung zum Kompaktieren und anschließenden Verschweißen von elektrischen Leitern, insbesondere zur Herstellung von Durchgangs- und Endknoten von Litzen, umfassend eine Ultraschallschwingungen erzeugende Sonotrode, von der ein Abschnitt eine erste seitliche Begrenzungsfläche eines in Höhe und Breite verstellbaren, im Querschnitt vorzugsweise rechteckförmigen, stirnseitig offenen Verdichtungsraums ist, dessen übrige Begrenzungsflächen Abschnitte einer mehrteiligen Gegenelektrode sind, wobei die Gegenelektrode ein erstes in etwa parallel zu dem Sonotrodenabschnitt verschiebbares, eine in etwa senkrecht zu dem Sonotrodenabschnitt verlaufende (zweite) Begrenzungsfläche bildendes erstes Teil sowie ein parallel zu der zweiten Begrenzungsfläche verschiebbares, eine dritte Begrenzungsfläche bildendes Teil umfaßt, von dem ein eine etwa parallel zu dem Sonotrodenabschnitt verlaufender, eine vierte Begrenzungsfläche bildender verschiebbarer Abschnitt ausgeht, der zumindest während des Kompaktierens und des Verschweißens an dem ersten Teil der Gegenelektrode anliegt oder nahezu anliegt, und wobei während des Kompaktierens das erste und das zweite Teil eine zwangsgekoppelte Bewegung ausüben.

Ein entsprechendes Verfahren bzw. eine Vorrichtung zur Durchführung dieses Verfahrens ist der DE 37 19 083 C1 zu entnehmen. Dabei wird sowohl während des Kompaktierens, also des Vorverdichtens, als auch während des Verschweißens der Verdichtungsraum in seinem Querschnitt verändert. Um die Leiter im gewünschten Umfang zu verschweißen, müssen für jeden Leiterquerschnitt die Schweißparameter individuell eingestellt werden.

Aus der EP 0 208 310 B1 ist ein Verfahren zum Regeln des Prozeßverlaufs zur Qualitätskontrolle beim Ultraschallschweißen von Werkstücken bekannt. Hierzu wird zur Aktivierung der Ultraschallenergie eine Sonotrode einer Ultraschallschweißvorrichtung auf ein auf einem Amboß aufliegendes Werkstück abgesenkt, wobei beim Aufsetzen der Sonotrode auf das Werkstück ein Null-Abgleich erfolgt, um anschließend die Sonotrode zu aktivieren und einen gewünschten Verformungsweg durchfahren zu lassen.

Aus der SU-A 757 337 ist ein Verfahren zum Ultraschallschweißen von thermoplastischen Stoffen bekannt, bei dem über einen unmittelbar an der Sonotrode angebrachten Wegaufnehmer die Einsinktiefe der Sonotrode und damit die Verformung der Werkstücke beim Verschweißvorgang erfaßt wird. Bei Vorzeichenänderung der zweiten zeitlichen Ableitung des Wegsignals wird der Schweißvorgang beendet.

In der DE-OS 2 149 748 wird ein Verfahren, eine Vorrichtung sowie ein System zur Herstellung von Verbindungen zu integrierten Schaltungen beschrieben. Um verbesserte Verbindungen zu erzielen, wird die Krafteinleitung auf ein Werkzeug, aber auch dessen Energiebeaufschlagung durch die über einen Wegaufnehmer ermittelte Deformation der zu verbindenden Teile gesteuert.

Eine Regelung des Schweißvorganges mittels Ultraschall ist aus der FR-A 2 302 172 bekannt, bei dem die Geschwindigkeit der Absinkbewegung einer Sonotrode beim Schweißvorgang erfaßt, mit vorgegebenen Grenzwerten verglichen und bei Überschreiten einstellbarer Schwellen die Energiezufuhr zur Sonotrode begrenzt wird.

Aus der GB-A-2 171 945 ist eine Vorrichtung zum Kompaktieren und Verschweißen von elektrischen Leitern bekannt, die mittels einer Sonotrode zwischen einer unbeweglichen Sonotrodenaußenseite und drei parallel bzw. senkrecht zur Sonotrode beweglichen Amboß außenseiten verschweiß bzw. verformt werden.

Auch wenn mit Hilfe der bekannten Verfahren bzw. Vorrichtungen versucht wird, Schweißvorgänge zu optimieren, ist es in Abhängigkeit von den zu verschweißenden Teilen erforderlich, Schweißparameter individuell einzustellen, insbesondere dann, wenn Durchgangs- und Endknoten von Litzen mittels Ultraschallschweißens hergestellt werden sollen.

Der vorliegenden Erfindung liegt das Problem zugrunde, ein Verfahren und eine Vorrichtung der zuvor genannten Art derart weiterzubilden, daß querschnittsunabhängig ein definiertes Schweißen erfolgen kann, auch dann, wenn in willkülicher Reihenfolge Leiter unterschiedlicher Querschnitte nacheinander verschweißt werden sollen.

Verfahrensmäßig wird das Problem im wesentlichen dadurch gelöst, daß unabhängig vom Querschnitt der zu verschweißenden Leiter diese auf einen Querschnitt kompaktiert werden, bei dem der Verdichtungsraum ein vorgegebenes Höhen-Breiten-Verhältnis aufweist, und daß in Abhängigkeit von der tatsächlichen Höhe oder Breite oder zumindest einer anderen charakteristischen Größe des Verdichtungsraums zum Verschweißen der Leiter erforderliche Schweißparameter appliziert werden.

Abweichend vom vorbekannten Stand der Technik erfolgt ein selbstregulierender Schweißablauf, der durch eine definierte Kompaktierung der zu verschweißenden Leiter initiiert wird, wobei der Verdichtungsraum am Ende des Verdichtens unabhängig von den zu verschweißenden Leiterquerschnitten ein vorgegebenes Höhen-Breiten-Verhältnis aufweist. Selbstverständlich kann auch ein anderes Maß des Verdichtungsraums zur Bestimmung des Querschnitts des Verdichtungsraums benutzt werden. Dies ist insbesondere dann der Fall, wenn der Verdichtungsraum z.B. einen ovalen Querschnitt aufweist oder Sonotrode und zugeordnete einstufige Gegenelektrode kammartig ineinandergreifen.

Nach Abschluß der Vorverdichtung ist es nur noch erforderlich, die tatsächliche Höhe oder Breite des Verdichtungsraums oder ein entsprechendes Maß z. B. mittels eines Wegaufnehmers zu bestimmen, wodurch aufgrund des fest vorgegebenen HöhenBreiten-Verhältnisses unmittelbar der Querschnitt der verdichteten Leiter vorliegt und somit diesen berücksichtigende Schweißparameter wie Schweißenergie, Schweißamplituden, Schweißzeit und Schweißdruck appliziert werden. Hierzu sind zuvor in Abhängigkeit von den Querschnitten der zu verschweißenden Leiter zugeordnete Schweißparameter in der das Verfahren realisierenden Schweißvorrichtung abgelegt worden, um diese dann für die jeweiligen Schweißvorgänge abrufen zu können.

Aufgrund des erfindungsgemäßen Vorschlages, die Vorverdichtung leiterquerschnittsunabhängig in einem Umfang vorzunehmen, daß die Höhe zur Breite des Verdichtungsraums in einem konstanten Verhältnis steht, ist es nicht mehr erforderlich, die Schweißparameter nach vorheriger Bestimmung der Leiterquerschnitte einzustellen. Vielmehr bedarf es nur noch der Bestimmung der Breite bzw. der Höhe nach Abschluß der Vorverdichtung, um aus diesem Wert unmittelbar die Schweißparamter ableiten zu können.

In Ausgestaltung der Erfindung ist vorgesehen, daß nach Abschluß der Kompaktierung der Verdichtungsraum allein senkrecht zur Ultraschall abgebenden und den Verdichtungsraum begrenzenden Sonotrodenfläche verkleinert wird. Hierdurch ergeben sich im Vergleich zu dem der DE 37 19 083 C1 zu entnehmenden Verfahren bessere Schweißergebnisse.

Insbesondere ist ein Verfahren zum Verschweißen von elektrischen Leitern mittels Ultraschall unter Verwendung eines die Leiter aufnehmenden, in seiner Höhe und Breite verstellbaren Verdichtungsraums, von dem eine Begrenzungsfläche von einem Sonotrodenabschnitt einer Ultraschallschweißvorrichtung gebildet wird, durch die Verfahrensschritte gekennzeichnet
- Einlegen der zu verschweißenden Leiter in den Verdichtungsraum,
- Kompaktieren der Leiter in dem Verdichtungsraum bis zu einer vorgegebenen Anpreßkraft bei gleichzeitiger Veränderung des Verdichtungsraums unter Zugrundelegung eines fest vorgegebenen Höhen-Breiten-Verhältnisses,
- Bestimmung der Höhe oder Breite oder zumindest einer anderen charakteristischen Größe des Verdichtungsraums nach Abschluß der Kompaktierung,
- Abrufen von abgelegten Schweißparametern unter Zugrundelegung der Höhe oder Breite bzw. der charakteristischen Größe des Verdichtungsraums,
- Verschweißung der kompaktiertem Leiter bei gleichzeitiger Veränderung des Verdichtungsraums ausschließlich in Richtung des Sonotrodenabschnitts oder in Höhe und Breite des Verdichtungsraums und
- Entfernen der Leiter,

Um eine Qualitätsüberwachung und/oder gegebenenfalls Optimierung der Schweißparameter zu ermöglichen, ist des weiteren vorgesehen, daß die tatsächlichen Schweißparameter (Ist-Werte) protokolliert und mit den abgelegten Schweißparametern (Soll-Werte) verglichen werden.

Eine Vorrichtung der eingangs beschriebenen Art zur Lösung des der Erfindung zugrundeliegenden Problems zeichnet sich dadurch aus, daß das erste Teil und das zweite Teil der Gegenelektrode derart zwangsgekoppelt sind, daß während des Kompaktierens der Leiter die Höhe und die Breite des Verdichtungsraums in einem fest vorgegebenen Verhältnis zueinander stehen, daß nach Abschluß des Kompaktierens das erste Teil von dem zweiten Teil derart entkoppelt ist, daß eines der Teile während des Verschweißens allein verstellbar ist, wobei vor Beginn des Verschweißens der Abstand zwischen zwei gegenüberliegenden Begrenzungsflächen des Verdichtungsraums erfaßbar ist. Dabei wird vorzugsweise die Höhe und/oder die Breite des Verdichtungsraums über einen Wegaufnehmer erfaßt.

Um sicherzustellen, daß der Querschnitt des Vorverdichtungsraums hinsichtlich Höhe und Breite das vorgegebene Verhältnis zueinander aufweisen, ist vorgesehen, daß eines der Teile der Gegenelektrode zwangsangetrieben ist, dessen Bewegung auf das andere Teil zu dessen Zwangsbewegung übertragbar ist. Dabei können die Teile der Gegenelektrode getrennt oder über ein gemeinsames Antriebsaggregat antreibbar sein.

Insbesondere kann die Bewegung des einen Teils der Gegenelektrode über einen Hebel übertragbar sein, gegen den das andere Teil vorgespannt ist. Dabei weist der Hebel vorzugsweise die Form eines ungleichschenkligen U's auf, dessen Schwenkachse den Querschenkel durchsetzt.

Eine weitere Ausgestaltung der Erfindung sieht vor, daß von dem ersten, als Schieber zu bezeichnenden Teil der Gegenelektrode eine Kraft in Richtung des von dem zweiten Teil ausgehenden, in Richtung des ersten Teils kraftbeaufschlagten verschiebbaren Abschnitts wirkt, der entlang eines stationären kurvenförmigen Vorsprungs derart verschiebbar ist, daß bei Verringerung des Abstands zwischen dem Sonotrodenabschnitt und der gegenüberliegenden Begrenzungsfläche während des Kompaktierens der Abstand der verbleibenden Seitenflächen proportional verringerbar ist.

Um sicherzustellen, daß nach Abschließen des Vorverdichtens, also vor Beginn des Verschweißens der Leiter der Verdichtungsraum nur noch in seiner senkrecht zur von der Sonotrode ausgehenden Begrenzungsfläche veränderbar ist, wirkt auf das erste Teil eine Arretierung wie verstellbarer Anschlag ein.

Ein eigenständiger erfinderischer Gedanke, für den losgelöst von dem der vorliegenden Erfindung zugrundeliegenden Verfahren Schutz nachgesucht wird, bezieht sich auf eine Vorrichtung zum Kompaktieren und anschließenden Verschweißen von elektrischen Leitern, insbesondere zur Herstellung von Durchgangs- oder Endknoten von Litzen, umfassend eine Ultraschallschwingungen erzeugende Sonotrode, von der ein Abschnitt eine erste seitliche Begrenzungsfläche eines in Höhe und Breite verstellbaren, stirnseitig offenen Verdichtungsraums ist, dessen übrige Begrenzungsflächen Abschnitte einer mehrteiligen Gegenelektrode sind, wobei die Gegenelektrode ein erstes zu dem Sonotrodenabschnitt verstellbares, eine in etwa senkrecht zu dem Sonotrodenabschnitt verlaufende zweite Begrenzungsfläche bildendes erstes Teil sowie ein parallel zu der zweiten Begrenzungsfläche verschiebbares, eine dritte Begrenzungsfläche bildendes zweites Teil umfaßt, von dem ein eine in etwa parallel zu dem Sonotrodenabschnitt verlaufende vierte Begrenzungsfläche bildender verschiebbarer Abschnitt wie Nase ausgeht, der zumindest während des Kompaktierens und des Verschweißens an dem ersten Teil der Gegenelektrode anliegt oder nahezu anliegt, wobei zumindest während des Kompaktierens das erste und das zweite Teil eine zwangsgekoppelte Bewegung ausüben, und zeichnet sich dadurch aus, daß das erste und das zweite Teil der Gegenelektrode über einen gemeinsamen Antrieb zwangsgekoppelt verstellbar sind, daß das zweite Teil mit dem Antrieb verbunden und über ein Federelement zu einem in Verstellrichtung des zweiten Teils eine Ablauffläche aufweisenden Element beabstandet ist, an der ein Arm eines mit dem ersten Teil der Gegenelektrode verbundenen und um eine ortsfeste Achse verschwenkbaren Hebels anliegt, daß während des Kompaktierens das zweite Teil der Gegenelektrode zusammen mit dem die Ablauffläche aufweisenden Element bei gleichzeitigem Verschwenken des Hebels über den Antrieb verstellbar ist und daß nach Erreichen einer vorgebbaren Anpreßkraft auf in dem Verdichtungsraum vorhandenen Leiter die zur Beabstandung von dem Federelement hervorgerufene Kraft überwunden und das zweite Teil gegenüber dem Element verstellbar ist. Dabei wird das die Ablauffläche aufweisende Element, an der sich der Hebel mit einem Arm abstützt, vorzugsweise durch einen Keil oder ein Kurvensegment gebildet, der bzw. das sich von der Gegenelektrode weg verjüngt. Alternativ besteht die Möglichkeit, daß die Ablauffläche einen konkaven oder einen konvexen Verlauf oder eine Kombination dieser aufweist.

Der das erste und das zweite Teil der Gegenelektrode zwangsantreibende Antrieb umfaßt in hervorzuhebender Ausgestaltung der Erfindung einen Druckmittelzylinder, dessen Kolbenstange das die Ablauffläche aufweisende Element durchsetzend mit dem zweiten Teil der Gegenelektrode verbunden ist, wobei im Zwischenraum zwischen dem Teil und dem Element das Federelement die Kolbenstange umgibt.

Mittels der erfindungsgemäßen Vorrichtung erfolgt ein proportionales Verschieben der Gegenelektrodenabschnitte beim Kompaktieren der Leiter, da eine Relativbewegung zwischen dem ersten Teil der Gegenelektrode und dem gegenüber diesem federvorgespannten Element, an dem sich der auf das zweit Teil einwirkende Hebel abstützt, zunächst unterbleibt, da diese quasi als Einheit verstellt werden. Erst dann, wenn eine vorgegebene Anpreßkraft über den Druckmittelzylinder auf das vorzugsweise die Nase aufweisende Teil eingeleitet ist, wird die die Gegenelektrode zu dem Teil beabstandende Federkraft überwunden, so daß bei weiterer Krafteinleitung bei feststehendem die Ablauffläche aufweisenden Element die Gegenelektrode zur weiteren Verkleinerung des Verdichtungsraums verschoben werden kann. Da das Element wie Keil bei dieser Bewegung stillsteht, wird der mit dem ersten Teil der Gegenelektrode verbundene Hebel nicht mehr bewegt, so daß die durch das erste Teil vorgegebene Dimension (Breite) des Verdichtungsraums unverändert bleibt.

Durch die Geometrie der Ablauffläche wird beim Kompaktieren das Höhen-/Breitenverhältnis des Verdichtungsraums verändert.

Ferner zeichnet sich die Erfindung dadurch aus, daß das erste und das zweite Teil der Gegenelektrode über einen gemeinsamen Antrieb zwangsgekoppelt verstellbar sind, daß das zweite Teil eine in dessen Verstellrichtung verlaufende Ablauffläche aufweist und mit dem Antrieb verbunden ist, daß an der Ablauffläche ein Arm eines mit dem ersten Teil verbundenen und um eine ortsfeste Achse verschwenkbaren Hebels anliegt, daß während des Kompaktierens das zweite Teil der Gegenelektrode bei gleichzeitigem Verschwenken des Hebels über den Antrieb verstellbar ist, daß das erste Teil gegenüber dem Hebel derart federvorgespannt ist, daß nach Erreichen einer vorgegebenen Anpreßkraft auf in dem Verdichtungsraum vorhandene Leiter das erste Teil der Gegenelektrode von einem weiteren Verschwenken des Hebels entkoppelt und arretierbar ist.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden bevorzugten Ausführungsbeispiels.

Es zeigen:
- Fig. 1: einen Ausschnitt einer Ultraschallschweißvorrichtung einer ersten Ausführungsform mit einem veränderbaren Verdichtungsraum,
- Fig. 2: einen Ausschnitt einer Ultraschallschweißvorrichtung einer zweiten Ausführungsform mit veränderbarem Verdichtungsraum,
- Fig. 3: ein Fließbild eines Verfahrensablauf zum Verschweißen von insbesondere elektrischen Leitern,
- Fig. 4: einen Ausschnitt einer Ultraschallschweißvorrichtung einer dritten besonders hervorzuhebenden Ausführungsform mit einem veränderbaren Verdichtungsraum,
- Fig. 5-6: Ausschnitte weiterer Ausführungsformen von Ultraschallschweißvorrichtungen,
- Fig. 7a-7b: eine vergrößert dargestellte erste Ablaufkurve mit Änderungen des Verdichtungsraums darstellenden Graphen und
- Fig. 8a-8b: eine vergrößert dargestellte zweite Ablaufkurve mit Änderungen des Verdichtungsraums darstellenden Graphen.

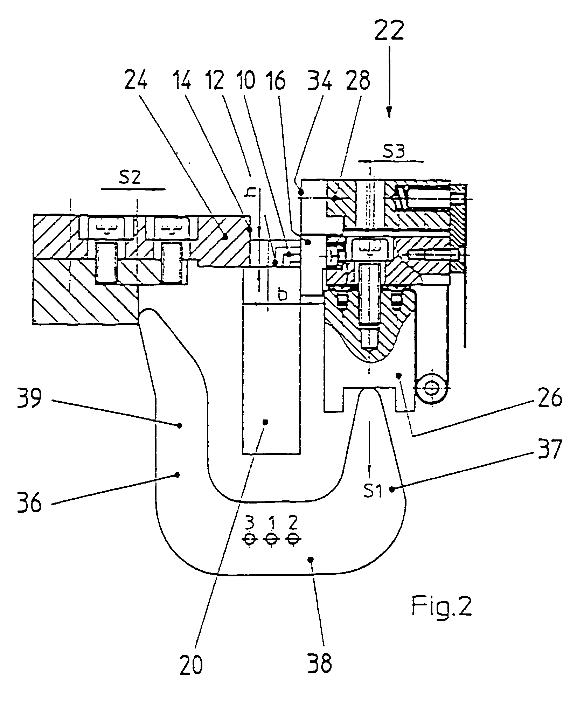

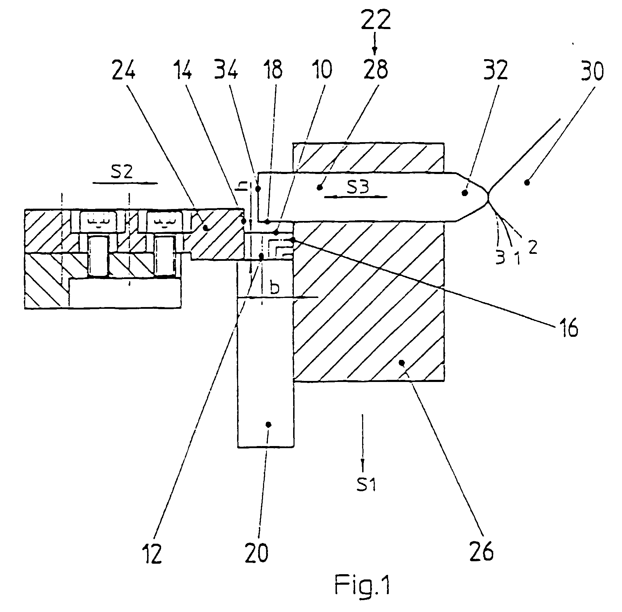

In Fig. 1 ist ein Ausschnitt einer Ultraschallschveißvorrichtung dargestellt, soweit ein auf zu verschweißende Leiter einstellbarer Verdichtungsraum (10) betroffen ist. Dabei kann die Ultraschallschweißvorrichtung selbst grundsätzlich einer Konstruktion entsprechen, die dem Gerät RK 2000 oder Minic Automatic der Schunk Ultraschalltechnik GmbH, Wettenberg, entspricht.

Der Verdichtungsraum (10) weist im Ausführungsbeispiel einen rechteckigen Querschnitt auf und ist stirnseitig offen. um durch diesen die zu verschweißenden Leiter zu führen. Verdichtungsräume mit anderen Querschnitten sind selbstverständlich auch denkbar, wie insbesondere mit einem trapezförmigen Querschnitt.

Der Verdichtungsraum (10) wird seitlich von Begrenzungsflächen (12), (14), (16) und (18) umschlossen, die einerseits von einem Abschnitt einer Sonotrode (20) und andererseits von einer mehrteiligen Gegenelektrode (22) wie Amboß begrenzt werden.

Die mehrteilige Gegenelektrode (22) umfaßt einen als erstes Teil der Gegenelektrode bezeichneten Schieber (24), der entlang der von der Sonotrode (20) zur Verfügung gestellten Begrenzungsfläche (12) verschiebbar ist und die seitliche Begrenzungsfläche (14) bildet. Die Bewegungsrichtung des Schiebers (24) ist durch den Pfeil (S2) angedeutet. Dem Schieber (24) gegenüberliegend ist ein zweites Teil (26) der Gegenelektrode (22) angeordnet, welches parallel zur Begrenzungsfläche (14), also senkrecht zur Sonotrodenfläche (12) verschiebbar ist (S1). Das zweite Teil (26) nimmt einen als Nase zu bezeichnenden Abschnitt (28) verschiebbar auf, welche entsprechend dem Pfeil (S3) parallel zur Sonotrodenfläche (12) bewegbar ist.

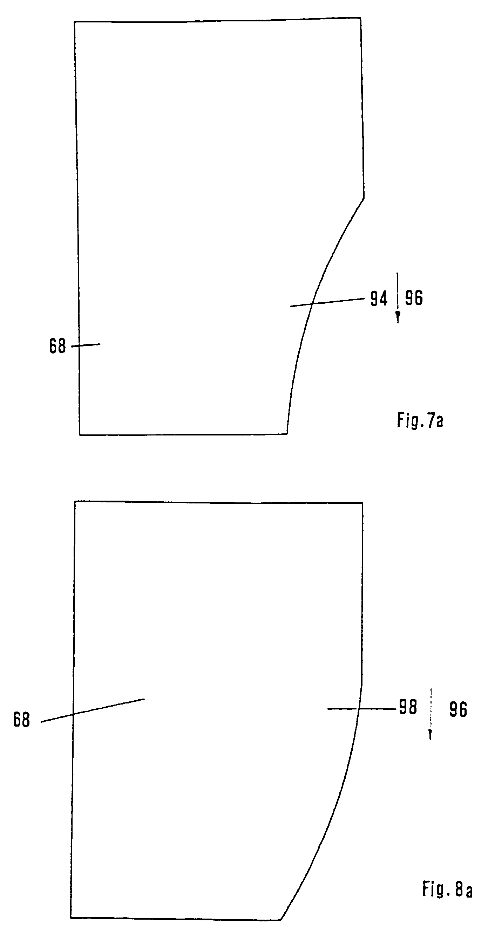

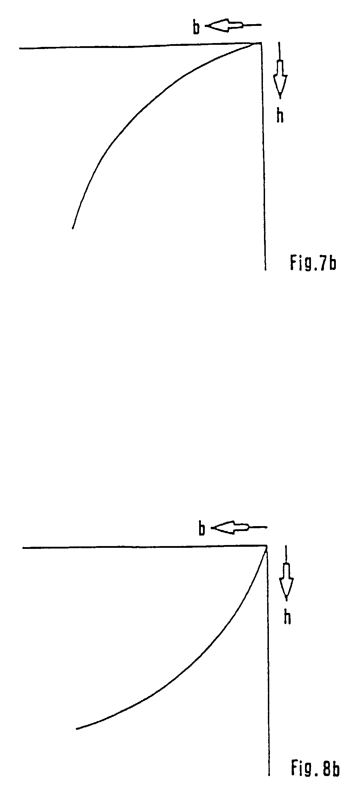

Um unabhängig von dem Querschnitt der zu verschweißenden Leiter ein selbstablaufendes und kontrolliertes Verschweißen zu ermöglichen, ohne daß die Vorrichtung bzw. die Schweißparameter zuvor auf die Querschnitte der zu verschweißenden Leiter einzustellen ist, ist erfindungsgemäß vorgesehen, daß der Verdichtungsraum (10) während des Kompaktierens, also des Vorverdichtens der zu verschweißenden Leiter ein zuvor fest vorgegebenes bzw. vorgebbares Höhen-Breiten-Verhältnis aufweist. Dies soll durch die in den Verdichtungsraum (10) eingezeichneten Rechtecke unterschiedlicher Größen symbolisiert werden. Abweichend von der Darstellung kann das Höhen-Breiten-Verhältnis während des Kompaktierens auch nichtlinear verändert werden (Fig. 7, 8)

Um sicherzustellen, daß das Verhältnis Breite (b) zu Höhe (h) stets den gewünschten Wert während des Vorverdichtens bis zu dessen Abschluß einnimmt, erfolgt eine Zwangskopplung der Teile (24) und (26) der Gegenelektrode (22) einschließlich deren Nase (28).

Dabei ist entsprechend der Ausführungsform der Fig. 1 der Verstellweg (S2) des Schiebers (24) eine Funktion sowohl des Stellwegs (S1) des senkrecht zur Sonotrodenfläche (12) verschiebbaren Amboßteils (26) als auch des Verstellweges (S3) der Nase (28).

Um diese Zwangskopplung zu erzielen, wirkt die senkrecht zum Verstellweg (S1) verschiebbare Nase (28) einerseits mit dem ersten Teil (24), also dem Schieber (24) der Gegenelektrode (22) und andererseits mit einem kurvenförmigen Abschnitt (30) zusammen, der als Nocken zu bezeichnen ist. Hierzu ist das zugewandte Ende (32) gleichfalls kurvenförmig ausgebildet.

Die Nase (28) ist in Richtung des Schiebers (24) vorgespannt, der seinerseits kraftschlüssig auf die Nase (28) einwirkt, wobei die durch den Schieber gebildete Begrenzungsfläche (14) teilweise an einer parallel hierzu verlaufenden Fläche (34) der Nase (28) anliegt.

Wird das als zweites Teil bezeichnete Amboßteil (26) z.B. pneumatisch in Richtung des Pfeils (S1) verschoben und gleichzeitig der Schieber (24) pneumatisch beigestellt, also kraftschlüssig an die Fläche (34) der Nase (28) angelegt, so wird diese entlang des Vorsprungs (30) verschoben, wodurch zusammen mit der Breitenveränderung des Verdichtungsraums (10) auch dessen Höhe verändert wird, und zwar in einem Verhältnis, daß die Höhe (h) zur Breite (b) stets in einem Verhältnis zueinander stehen, das durch eine Ablaufkurve des Vorsprungs (30) vorgegeben ist, entlang der Nase (32) mit ihrem Endabschnitt (32) verschoben wird. Ist die Ablaufkurve eine Gerade, so ändert sich die Höhe (h) zur Breite (b) im konstanten Verhältnis.

Das Verhältnis von Höhe (h) zur Breite (b) hängt folglich vom Verlauf der aufeinander abgleitenden Flächen von Vorspung (30) und Endabschnitt (32) ab. Dies soll durch die mit den Bezugszeichen (1), (2) und (3) bezeichneten Flächen des Nockens (30) angedeutet werden.

Sobald die Vorverdichtung abgeschlossen ist, wird die Höhe (hj und die Breite (b) z.B. mittels eines dem Schieber (24) oder dem zweiten Teil (26) der Gegenelektrode (22) zugeordneten und nicht dargestellten Wegaufnehmers bestimmt, um sodann zuvor abgelegte Schweißparameter wie Schweißenergie, Schweißamplitude, Schweißzeit und Schweißdruck abzurufen und die in dem Verdichtungsraum (10) vorhandenen Leiter zu verschweißen, wobei gleichzeitig die Höhe (h) des Verdichtungsraums (10) verringert wird, ohne daß die Breite (b) kontrolliert verändert wird; denn nach Abschluß der Vorverdichtung wird der Schieber (24) arretiert.

Da die Nase (28) unabhängig von der auf sie über den Schieber (24) einwirkenden Kraft an dem Schieber (24) anliegt, bleibt beim Absenken des zweiten Teils (26) eine flächige Berührung zwischen dem Schieber (24) und der Nase (28) bestehen, so daß die Leiter weiterhin vollständig von den Begrenzungsflächen (12), (14), (16) und (18) des Verdichtungsraums (10) umgeben sind.

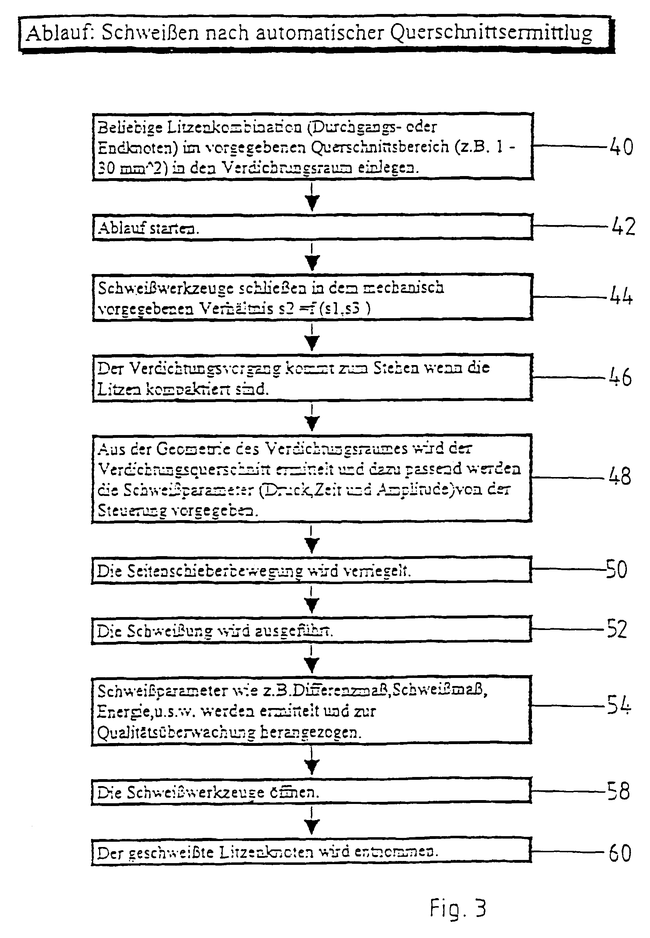

Das Ausführungsbeispiel der Fig. 2 unterscheidet sich von dem der Fig. 1 dahingehend, als daß eine Zwangskopplung zwischen dem Schieber (24) und dem die Nase (28) haltenden zweiten Teil (26) der Gegenelektrode (22) über einen Hebel (36) erfolgt, der die Form eines ungleichschenkligen U's aufweist. dessen Drehachse seinen Querschenkel (38) durchsetzt. Die entsprechenden Drehpunkte sind mit den Bezugszeichen (1), (2) und (3) versehen, wodurch das Übersetzungsverhältnis der Translationsbewegungen (S1) und (S2) vorgegeben wird. Diese wiederum bestimmen das Verhältnis von Höhe (h) und Breite (b) des Verdichtungsraums.

Der Schieber (24) und das die Nase (28) aufnehmende Teil (26) sind vorzugsweise pneumatisch angetrieben, wobei gleichfalls der Schieber (24) bei geschoben wird. Hierbei dient der Schenkel (39) des Hebels (36) als Anschlag. Auf den anderen vorzugsweise kürzeren Schenkel (37) wirkt zum Verschwenken des Hebels das zweite Teil (26) der Gegenelektrode (22).

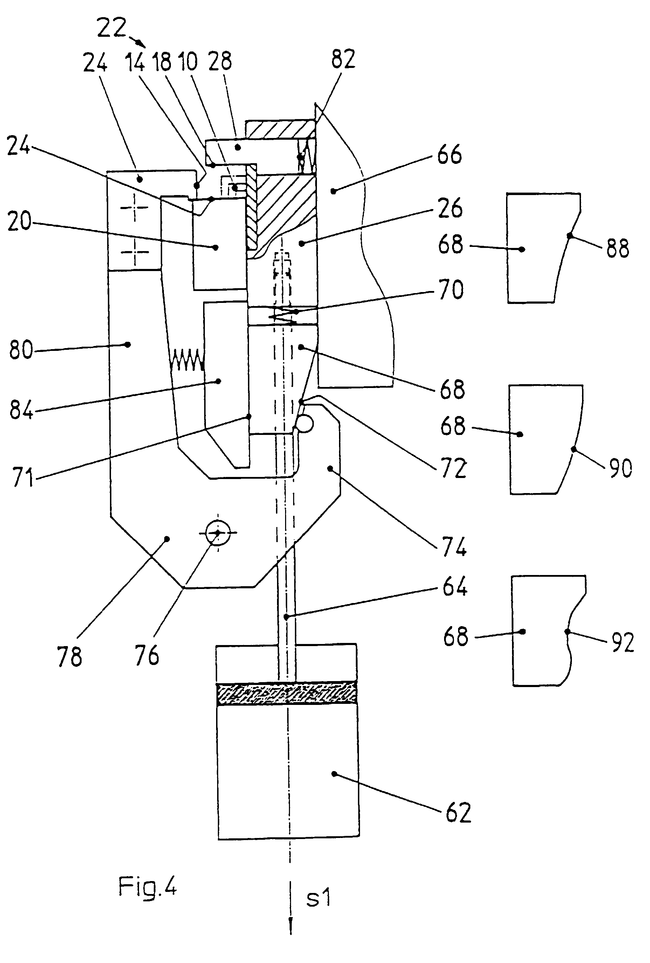

Der Fig. 4 ist eine besonders hervorzuhebende Ausführungsform eines in Höhe und Breite verstellbaren Verdichtungsraums (10) einer Ultraschallschweißvorrichtung zu entnehmen, wobei die vorgeschlagene Zwangskopplung der die Gegenelektrode (22) bildenden ersten und zweiten Teile (24) und (26) mit der Nase (28) einen selbständigen Schutz begründet.

Erfindungsgemäß erfolgt die Zwangskopplung zwischen dem als Schieber bezeichneten ersten Teil (24) und dem senkrecht zur von der Sonotrode (20) gebildeten Begrenzungsfläche (12) des Verdichtungsraums (10) verschiebbaren zweiten Teil (26) über ein einziges Antriebsaggregat in Form eines Druckmittelzylinders wie Pneumatikzylinders (62), dessen Kolbenstange (64) mit dem zweiten Teil (26) verbunden ist. Dabei ist das zweite Teil (26) in Längsrichtung der Kolbenstange (64) zwischen der Sonotrode (20) und einem eine Führungsfläche (65) bildenden Element (66) verschiebbar.

Die Kolbenstange (64) durchsetzt ferner ein eine Ablauffläche oder -kurve aufweisendes Element wie Keil (68), das bzw. der gegenüber dem zweiten Teil (26) der Gegenelektrode (22) über vorzugsweise eine Teller- oder Schraubenfeder (70) beabstandet ist, die seinerseits die Kolbenstange (64) umgibt.

Der Keil (68), der zwischen zwei parallel zueinander verlaufenden Führungsflächen, nämlich der Führungsfläche (65) und gegenüberliegender Führungsfläche (71) in Längsrichtung der Kolbenstange (64) verschiebbar ist, weist eine im Ausführungsbeispiel rampenförmige Ablauffläche (72) derart auf, daß sich der Keil (68) von dem zweiten Teil (26) weg verjüngt.

An der Ablauffläche (72) ist gleitend ein Schenkel (74) eines um eine ortsfeste Achse (76) drehbaren Verbindungselements (78) in Form eines Hebels abgestützt, der die Form eines L's bzw. ungleichschenkligen U's aufweist.

Der dem an der Ablaufkurve (72) entlanggleitende Schenkel (74) gegenüberliegende Schenkel (80) ist dabei starr mit dem Schieber (24) verbunden oder bildet mit diesem eine Einheit. Hierdurch bedingt wird durch Verschwenken des Hebels (78) der Schieber (24) in Richtung des Teils (26) der Gegenelektrode (22) bewegt oder von diesem entfernt, um so den Verdichtungsraum (10) zu schließen bzw. zu öffnen.

Wird die Kolbenstange (64) in den Zylinder (62) zurückgezogen, so bewegt sich das zweite Teil (26) zusammen mit dem Keil (68) in Richtung des Pfeils (S1). Infolgedessen wird der Hebel (78) im Uhrzeigersinn mit der Wirkung verschwenkt, daß der Verdichtungsraum (10) verkleinert wird - und zwar in Höhe (h) und Breite (b). Dabei sind die Abmessungen der einzelnen Elemente derart aufeinander abgestimmt, daß die Fläche (14) des ersten Teils (24) an der Nase (28) beim Kompaktieren der in dem Verdichtungsraum (10) vorhandenen Leitern anliegt.

Aufgrund der von der Feder (70) hervorgerufenen Kraft bewegt sich während des Kompaktierens das zweite Teil (26) und der Keil (68) im gleichbleibenden Abstand zueinander, also als Einheit in Richtung des Pfeiles (S1), so daß proportional zum Absenken der Nase (28) der Schieber (24) in Richtung des zweiten Teils (26) der Gegenelektrode (22) verschoben wird, wodurch die Breite (b) des Verdichtungsraums (10) verringert wird.

Sobald auf die Leiter eine vorgegebene Anpreßkraft erreicht wird, wird die Kraft der Feder (70) bei weiterem Verschieben des Kolbens (64) in Richtung des Pfeils (S1) überwunden, so daß infolgedessen das zweite Teil (26) in Richtung des Keils (68) verschoben wird, ohne daß sich letzterer bewegt. Dies wiederum bedeutet, daß der Hebel (78) nicht mehr verschwenkt wird, so daß infolgedessen der Verdichtungsraum (10) in seiner Breite (b) konstant bleibt, jedoch in seiner Höhe (h) gleichzeitig verringert wird. Gleichzeitig erfolgt das Ultraschallschweißen.

Um die Nase (28) mit dem Schieber (24) verschieben zu können, ist erstere gegenüber dem Grundkörper (zweites Teil) (26) über eine Feder (82) abgestützt. Ferner ist der Hebel (80) gegenüber einem die Führungsfläche (71) bildenden Element (84) federvorgespannt.

Erwähntermaßen wird durch die Geometrie der Ablauffläche oder -kurve (72). entlang der der Schenkel (74) des Hebels (78) entlanggleitet, beim Kompaktieren das Höhen-Breiten-Verhältnis des Verdichtungsraums (10) im gewünschten Umfang verändert.

Sofern es sich bei der Ablauffläche (72) um eine Gerade handelt, ändert sich die Höhe (h) zur Breite b) des Verdichtungsraums (10) in einem konstanten, also linearen Verhältnis. Es kann jedoch wünschenswert sein, daß das Höhen-Breiten-Verhältnis des Verdichtungsraums (10) nicht linear verändert wird, sondern z.B. die Höhenveränderung größer als die der Breite und umgekehrt ist. Um dies zu erreichen, kann die Ablaufkurve (72) Geometrien aufweisen, die in der Fig. 4 mit den Bezugszeichen (88), (90) und (92) versehen sind. So ist der Verlauf der Ablaufkurve (88) konkav, die der Ablaufkurve (90) konvex geformt. Auch kann eine Kombination dieser vorliegen, wie die Ablaufkurve (92) verdeutlicht.

Wie sich der Verlauf der Ablaufkurve auf das Höhen-Breiten-Verhältnis auswirkt, ist den Fig. 7 und 8 zu entnehmen. So ist in Fig. 7a in vergrößerter Darstellung das von der nicht dargestellten Kolbenstange (64) durchsetzte Element (68) dargestellt, das eine der Kurve (88) entsprechende konkave Ablaufkurve (94) besitzt, entlang der das Hebeelement (78) gleitet, um den Schieber (24) beim Kompaktieren elektrischer Leiter in dem Verdichtungsraum (10) in Abhängigkeit von dessen Höhe (h) in seiner Breite (b) zu verstellen.

Gleitet nun der Schenkel (74) entlang der Ablaufkurve (94) in Pfeilrichtung (96), so ändert sich das Höhen-Breiten-Verhältnis fortwährend derart, daß mit zunehmendem Stellweg, also Verschiebung in Richtung des Pfeils (96) die Breite stärker verringert wird als die Höhe. Dies wird durch den Graphen der Fig. 7b verdeutlicht. Dabei ist in Fig. 7b die Höhe gegenüber der Breite dargestellt.

In den Fig. 8a bis 8c weist das Element (68) eine konvex verlaufende Ablaufkurve (98) auf. Hierdurch bedingt ändert sich gemäß Fig. 8b die Höhe des Verdichtungsraums (10) stärker als die Breite (b).

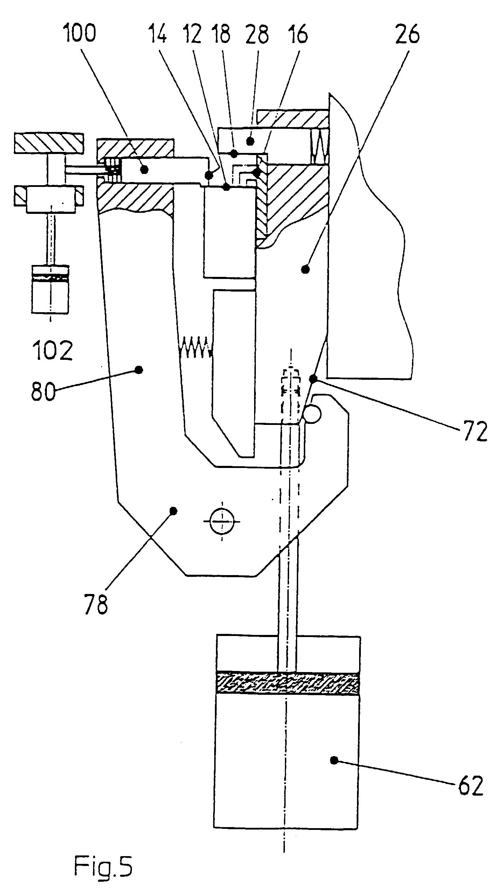

Entsprechende Ablaufkurven können auch bei einer Ultraschallschweißvorrichtung vorliegen, die im Ausschnitt und rein prinzipiell der Fig. 5 zu entnehmen ist. Dabei sind in bezug auf die Fig. 4 gleiche Elemente mit gleichen Bezugszeichen versehen.

Abweichend vom Ausführungsbeispiel der Fig. 4 wird der Verdichtungsraum (10) von einem Schieber (100) gebildet, der nicht starr mit dem Hebelelement (78) verbunden ist, sondern in dessen Längsschenkel (80) verschiebbar angeordnet ist. Wenn das Kompaktieren abgeschlossen ist und der Schweißvorgang beginnt, wird der Schieber (100) arretiert. Analog dem Ausführungsbeispiel der Fig. 4 wird die Federkraft eines auf den Schieber (100) einwirkenden Federelements (101) überwunden. Dieser Schwellenwert wird auf einen auf den Schieber (10) einwirkenden Antrieb (Verriegelungszylinder) (102) derart übertragen, daß bei einem weiteren Verschwenken des Hebels (78) der Schieber (100) arretiert wird. Hierdurch wird ebenfalls das die Erfindung prägende Merkmal realisiert, nämlich beim Kompaktieren der elektrischen Leiter den Verdichtungsraum (10) in seiner Höhe (h) und Breite (b) in einem vorgegebenen Verhältnis, das durch die Ablaufkurve (72) vorgegeben wird, zu verändern, wohingegen nach Abschluß des Kompaktierens und Ermittlung des hierfür repräsentativen Wertes des Verdichtungsraums (10) der Verdichtungsraum nur noch in seiner Höhe (h) bei unverrückbarem Schieber (19), also bei unveränderbarer Breite (b) des Verdichtungsraums (10) verändert wird.

Durch die Ausführungsform der Fig. 5 erübrigt sich eine Kopplung zwischen dem die Ablaufkurve (12) aufweisenden Element und dem senkrecht zur Sonotrodenfläche verschiebbaren zweiten Teil der Gegenelektrode. Vielmehr kann das zweite Teil der Elektrode (26) im zum Verdichtungsraum (10) entfernt liegenden Bereich die Ablaufkurve (72) aufweisen.

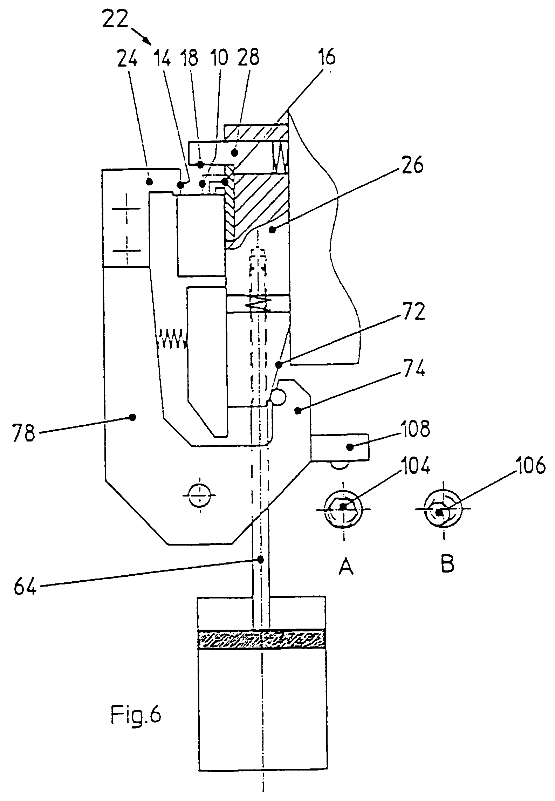

Das Ausführungsbeispiel der Fig. 6 unterscheidet sich von denen der Fig. 4 und 5 dahingehend. daß eine Selbstbestimmung des Querschnitts des Verdichtungsraums unterbleibt. Allerdings kann unter Zugrundelegung von die Fig. 4 prägenden Merkmalen die Höhe des von den Begrenzungsflächen (14), (16) und (18) der Gegeneleketrodenteile (24), (26) und (28) sowie der Fläche (12) der Sonotrode (20) begrenzten Verdichtungsraums (10) eine festlegbare Breite unterschreiten da die Schwenkbewegung des Hebelarms (78) durch Anschläge (104) bzw. (106) begrenzbar ist. Hierzu ragt vorzugsweise ein Abschnitt (108) von dem kürzeren Schenkel (74) des Hebelarms seitlich ab, um gegen den Anschlag (104) bzw. (106) dann anzuliegen, wenn die Breite des Verdichtungsraums (10) nicht mehr verändert werden soll. Wird der Kolben (74) sodann weiter zurückgezogen, so wird allein durch Absenken des zweiten Teils (26) der Gegenelektrode (22) und damit der Nase (28) die Höhe des Verdichtungsraums (10) reduziert, ohne daß die Breite (b) verändert wird.

Um auch die Breite durch die Anschläge (104) bzw. (106) variieren zu können, sind die Anschlagelemente (104) bzw. (106) exzentrisch gelagert.

Mit der erfindungsgemäßen Lehre können Litzen beliebiger Querschnitte, vorzugsweise im Bereich zwischen 0,35 und 40 mm² mittels Ultraschallschweißen zur Bildung von z.B. Durchgangs- oder Endknoten verschweißt werden, wobei eine automatische Querschnittsermittlung erfolgt, über die wiederum zuvor abgelegte Schweißparameter appliziert werden.

Der diesbezügliche Verfahrensablauf ist dem Fließschema der Fig. 3 zu entnehmen.

Zu Beginn wird eine beliebige Litzenkombination in den Verdichtungsraum (10) eingelegt (Schritt (40)). Sodann wird der Ablauf gestartet (Schritt (42)). Der Verdichtungsraum (10) wird geschlossen, wobei Höhe und Breite ein fest vorgegebenes Verhältnis zueinander einnehmen. Höhe und Breite sind dabei von der Art der Kopplung der die Gegenelektrode (22) bildenden Teile (24), (26), (28) und dem diese verbindenden Kopplungsmechanismus (30), (32) bzw. (36) abhängig. Nach Schließen des Schweißwerkzeuges (Schritt (44)) und Beenden des Kompaktierens (Schritt (46)) wird aus der Geometrie des Verdichtungsraums (10), der allein durch Kenntnis der Höhe bzw. der Breite oder einer anderen spezifischen Größe bestimmt wird, der Verdichtungsquerschnitt ermittelt und passend hierzu werden die zuvor in der Vorrichtung abgelegten Schweißparameter wie Druck, Zeit und Amplitude appliziert (Schritt (48)). Gleichzeitig wird eine weitere Bewegung des Seitenschiebers (24) unterbunden. Hierzu wird der Seitenschieber (24) arretiert wie verriegelt (Schritt (50)). Sodann wird die Schweißung durchgeführt (Schritt (52)), wobei die Höhe (h) verringert wird.

Selbstverständlich bestünde auch die Möglichkeit, beim Schweißen sowohl die Höhe (h) als auch die Bereite (b) des Verdichtungsraums (10) zu variieren.

Um eine Qualitätsüberwachung zu ermöglichen bzw. gegebenenfalls die gemäß Schritt (48) vorgegebenen Schweißparameter zu optimieren, werden die Ist-Werte der verschweißten Leiter, also Schweißparameter wie z.B. Differenzmaß, Schweißmaß oder Energie ermittelt (Schritt (54)).

Abschließend wird das Schweißwerkzeug geöffnet (Schritt (58)), um die verschweißten Leiter zu entnehmen (Schritt (60)). Sodann können in dem Verdichtungsraum (10) erneut zu verschweißende Litzen eingelegt werden, ohne daß deren Querschnitt zuvor bekannt sein muß.

## Patentansprüche

1. Verfahren zum Kompaktieren und anschließenden Verschweißen von elektrischen Leitern, insbesondere zur Herstellung von Durchgangs- oder Endknoten von Litzen, mittels Ultraschall in einem an die Leiter angepaßten, in Höhe (h) und Breite (b) verstellbaren Verdichtungsraum (10), wobei die zu verschweißenden Leiter zunächst kompaktiert und sodann verschweißt werden,
wobei
unabhängig vom Querschnitt der zu verschweißenden Leiter diese auf einen Querschnitt kompaktiert werden, bei dem der Verdichtungsraum (10) ein vorgegebenes Höhen-Breiten-Verhältnis aufweist, und wobei anschließend in Abhängigkeit von der tatsächlichen Höhe oder Breite oder zumindest einer anderen charakteristischen Größe des Verdichtungsraums zum Verschweißen der Leiter erforderliche Schweißparameter appliziert werden.

2. Verfahren nach Anspruch 2,
**dadurch gekennzeichnet,**
daß nach Abschluß der Kompaktierung der Verdichtungsraum (10) senkrecht zur Ultraschall abgebenden und den Verdichtungsraum begrenzenden Sonotrodenfläche (12) verkleinert wird.

3. Verfahren nach Anspruch 1 oder 2,
**dadurch gekennzeichnet,**
daß die Kompaktierung bei einer unabhängig von dem Querschnitt der zu verschweißenden Leiter festgelegten Anpreßkraft beendet wird.

4. Verfahren zum Verschweißen von elektrischen Leitern mittels Ultraschall unter Verwendung eines die Leiter aufnehmenden, in seiner Höhe (h) und Breite (b) verstellbaren Verdichtungsraums (10), von dem eine Begrenzungsfläche (12) von einem Sonotrodenabschnitt einer Ultraschallschweißvorrichtung gebildet wird,
wobei das Verfahren die folgenden Verfahrensschritte aufweist:
- Einlegen der zu verschweißenden Leiter in den Verdichtungsraum (10),
- Kompaktieren der Leiter in dem Verdichtungsraum bis zu einer vorgegebenen Anpresskraft bei gleichzeitiger Veränderung des Verdichtungsraums unter Zugrundelegung eines fest vorgegebenen Höhen-Breiten-Verhältnisses,
- Bestimmung der Höhe (h) oder Breite (b) oder zumindest einer anderen charakteristischen Größe des Verdichtungsraums nach Abschluß der Kompaktierung,
- Abrufen von abgelegten Schweißparametern unter Zugrundelegung der Höhe oder Breite bzw. der charakteristischen Größe des Verdichtungsraums,
- Verschweißen der kompaktiertem Leiter bei gleichzeitiger Veränderung des Verdichtungsraums ausschließlich in Richtung des Sonotrodenabschnitts oder in Höhe und Breite des Verdichtungsraums und
- Entfernen der verschweißten Leiter.

5. Verfahren nach Anspruch 4,
**dadurch gekennzeichnet,**
daß die tatsächlichen Schweißparameter protokolliert werden.

6. Vorrichtung zum Kompaktieren und anschließenden Verschweißen von elektrischen Leitern. insbesondere zur Herstellung von Durchgangs- oder Endknoten von Litzen, umfassend eine Ultraschallschwingungen erzeugende Sonotrode (20). von der ein Abschnitt eine erste seitliche Begrenzungsfläche (12) eines in Höhe und Breite verstellbaren, im Querschnitt vorzugsweise rechteckförmigen, stirnseitig offenen Verdichtungsraums (10) ist, dessen übrige Begrenzungsflächen (14, 16, 18) Abschnitte einer mehrteiligen Gegenelektrode (22) sind, wobei die Gegenelektrode ein erstes in etwa parallel zu dem Sonotrodenabschnitt verschiebbares, eine in etwa senkrecht zu dem Sonotrodenabschnitt verlaufende zweite Begrenzungsfläche (14) bildendes erstes Teil (24) sowie ein parallel zu der zweiten Begrenzungsfläche verschiebbares, eine dritte Begrenzungsfläche (16) bildendes zweites Teil (26) umfaßt, von dem ein eine in etwa parallel zu dem Sonotrodenabschnitt verlaufende vierte Begrenzungsfläche (18) bildender verschiebbarer Abschnitt (28) wie Nase ausgeht, der zumindest während des Kompaktierens und des Verschweißens an dem ersten Teil der Gegenelektrode anliegt oder nahezu anliegt, wobei während des Kompaktierens das erste und das zweite Teil eine zwangsgekoppelte Bewegung ausüben,
**dadurch gekennzeichnet,**
daß das erste Teil (24) und das zweite Teil (26) der Gegenelektrode (22) derart zwangsgekoppelt sind, daß während des Kompaktierens der Leiter die Höhe (h) und die Breite (b) des Verdichtungsraums (10) in einem fest vorgegebenen Verhältnis zueinander stehen, und daß nach Abschluß des Kompaktierens das erste Teil von dem zweiten Teil derart entkoppelt ist, daß eines der Teile während des Verschweißens allein verstellbar ist, wobei vor Beginn des Verschweißens der Abstand zwischen Punkten von zwei gegenüberliegenden Begrenzungsflächen (12, 18; 14, 16) des Verdichtungsraums (10) erfaßbar ist.

7. Vorrichtung nach Anspruch 6,
**dadurch gekennzeichnet,**
daß die Höhe (h) und/oder die Breite (b) oder sonstige während des Kompaktierens zueinander verstellbare Meßpunkte des Verdichtungsraums (10) über insbesondere einen Wegaufnehmer erfaßbar sind.

8. Vorrichtung nach Anspruch 6 oder Anspruch 7,
**dadurch gekennzeichnet,**
daß das erste und das zweite Teil (24, 26) der Gegenelektrode (22) getrennt oder über ein gemeinsames Antriebsaggregat (62) antreibbar sind.

9. Vorrichtung nach Anspruch 8,
**dadurch gekennzeichnet,**
daß die Bewegung (S1) eines der Teile (26, 24) der Gegenelektrode (22) auf das andere Teil (24, 26) zu dessen Zwangsbewegung (S2) einwirkt, wie übertragbar ist.

10. Vorrichtung nach zumindest einem der vorhergehenden Ansprüche,
**dadurch gekennzeichnet,**
daß die Bewegung (S1) des einen Teils (26) über einen Hebel (36) übertragbar ist, dessen einer Schenkel (39) als Anschlag für die Bewegung des anderen Teils (24) dient

11. Vorrichtung nach Anspruch 10,
**dadurch gekennzeichnet,**
daß der Hebel (36) eine Form eines ungleichschenkligen U's aufweist, dessen Schwenkachse (1, 2, 3) seinen Querschenkel (38) durchsetzt.

12. Vorrichtung nach zumindest einem der vorhergehenden Ansprüche,
**dadurch gekennzeichnet,**
daß die Teile (24, 26) der Gegenelektrode (22) pneumatisch angetrieben sind. von denen eines gegen den als Anschlag dienenden Schenkel (39) des Hebels (36) beistellbar ist.

13. Vorrichtung nach zumindest einem der vorhergehenden Ansprüche,
**dadurch gekennzeichnet,**
daß das erste Teil (24) kraftschlüssig an dem von dem zweiten Teil (26) ausgehenden, in Richtung des ersten Teils kraftbeaufschlagten verschiebbaren Abschnitt (28) anliegt, der seinerseits entlang eines kurvenförmigen Vorsprungs (30) derart verschiebbar ist, daß bei Verringerung des Abstands zwischen der von der Sonotrode (20) gebildeten Begrenzungsfläche (12) und der gegenüberliegenden Begrenzungsfläche (18) während des Kompaktierens der Leiter der Abstand der verbleibenden Seitenflächen (14, 16) proportional verringerbar ist und umgekehrt.

14. Vorrichtung zum Kompaktieren und anschließenden Verschweißen von elektrischen Leitern, insbesondere zur Herstellung von Durchgangs- oder Endknoten von Litzen, umfassend eine Ultraschallschwingungen erzeugende Sonotrode (20), von der ein Abschnitt eine erste seitliche Begrenzungsfläche (12) eines in Höhe und Breite verstellbaren, stirnseitig offenen Verdichtungsraums ist, dessen übrige Begrenzungsflächen (14, 16, 18) Abschnitte einer mehrteiligen Gegenelektrode (22) sind, wobei die Gegenelektrode ein erstes zu dem Sonotrodenabschnitt verstellbares, eine in etwa senkrecht zu dem Sonotrodenabschnitt verlaufende zweite Begrenzungsfläche (14) bildendes erstes Teil (24) sowie ein parallel zu der zweiten Begrenzungsfläche verschiebbares, eine dritte Begrenzungsfläche (16) bildendes zweites Teil (26) umfaßt, von dem ein eine in etwa parallel zu dem Sonotrodenabschnitt verlaufende vierte Begrenzungsfläche (18) bildender verschiebbarer Abschnitt (28) wie Nase ausgeht, der zumindest während des Kompaktierens und des Verschweißens an dem ersten Teil der Gegenelektrode anliegt oder nahezu anliegt, wobei zumindest während des Kompaktierens das erste und das zweite Teil eine zwangsgekoppelte Bewegung ausüben,
**dadurch gekennzeichnet,**
daß das erste und das zweite Teil (24, 26) der Gegenelektrode (22) über einen gemeinsamen Antrieb (62, 64) zwangsgekoppelt verstellbar sind, daß das zweite Teil (26) mit dem Antrieb verbunden und über ein Federelement (70) zu einem in Verstelleinrichtung des zweiten Teils eine Ablauffläche (72, 88, 90, 92, 94, 98) aufweisenden Element (68) beabstandet ist, an der ein Arm eines mit dem ersten Teil (24) verbundenen und um eine ortsfeste Achse (76) verschwenkbaren Hebels (78) anliegt, wobei während des Kompaktierens das zweite Teil der Gegenelektrode zusammen mit dem die Ablauffläche aufweisenden Element bei gleichzeitigem Verschwenken des Hebels über den Antrieb verstellbar ist und nach Erreichen einer vorgegebenen Anpreßkraft auf in dem Verdichtungsraum (10) vorhandene Leiter die zur Beabstandung von dem Federelement hervorgerufene Kraft überwunden und das zweite Teil gegenüber dem Element verstellbar ist.

15. Vorrichtung nach zumindest Anspruch (14),
**dadurch gekennzeichnet,**
daß das die Ablauffläche (72) aufweisende Element (68) ein Keil oder ein Kurvensegment (88, 90, 92, 94, 98) ist, der oder das in Richtung des Verstellwegs (S1) des zweiten Teils (26) der Gegenelektrode (22) verläuft, wobei das Kurvensegment eine konkave oder konvexe Form oder eine Kombination dieser aufweist.

16. Vorrichtung nach zumindest einem der vorhergehenden Ansprüche,
**dadurch gekennzeichnet,**
daß der Antrieb (62) einen Druckmittelzylinder umfaßt, dessen Kolbenstange das die rampenförmige Fiäche (72) aufweisende Element (68) durchsetzend mit dem einen Teil (26) der Gegenelektrode (22) verbunden ist.

17. Vorrichtung nach zumindest einem der vorhergehenden Ansprüche,
**dadurch gekennzeichnet,**
daß das Federelement (70) die Kolbenstange (64) umgibt.

18. Vorrichtung zum Kompaktieren und anschließenden Verschweißen von elektrischen Leitern, insbesondere zur Herstellung von Durchgangs- oder Endknoten von Litzen, umfassend eine Ultraschallschwingungen erzeugende Sonotrode (20), von der ein Abschnitt eine erste seitliche Begrenzungsfläche (12) eines in Höhe und Breite verstellbaren, stirnseitig offenen Verdichtungsraums ist, dessen übrige Begrenzungsflächen (14, 16, 18) Abschnitte einer mehrteiligen Gegenelektrode (22) sind, wobei die Gegenelektrode ein erstes zu dem Sonotrodenabschnitt verstellbares, eine in etwa senkrecht zu dem Sonotrodenabschnitt verlaufende zweite Begrenzungsfläche (14) bildendes erstes Teil (24) sowie ein parallel zu der zweiten Begrenzungsfläche verschiebbares, eine dritte Begrenzungsfläche (16) bildendes zweites Teil (26) umfaßt, von dem ein eine in etwa parallel zu dem Sonotrodenabschnitt verlaufende vierte Begrenzungsfläche (18) bildender verschiebbarer Abschnitt (28) wie Nase ausgeht, der zumindest während des Kompaktierens und des Verschweißens an dem ersten Teil der Gegenelektrode anliegt oder nahezu anliegt, wobei zumindest während des Kompaktierens das erste und das zweite Teil eine zwangsgekoppelte Bewegung ausüben,
**dadurch gekennzeichnet,**
daß das erste und das zweite Teil (24, 26) der Gegenelektrode (22) über einen gemeinsamen Antrieb (62, 64) zwangsgekoppelt verstellbar sind, daß das zweite Teil (26) eine in dessen Verstellrichtung verlaufende Ablauffläche (72, 88, 90, 92, 94, 98) aufweist und mit dem Antrieb verbunden ist, daß an der Ablauffläche ein Arm eines mit dem ersten Teil (24) verbundenen und um eine ortsfeste Achse (76) verschwenkbaren Hebels (78) anliegt, daß während des Kompaktierens das zweite Teil der Gegenelektrode bei gleichzeitigem Verschwenken des Hebels über den Antrieb verstellbar ist und nach Erreichen einer vorgegebenen Anpreßkraft auf in dem Verdichtungsraum (10) vorhandene Leiter das erste Teil der Gegenelektrode von einem weiteren Verschwenken des Hebels entkoppelt und arretierbar ist.

19. Vorrichtung zum Kompaktieren und anschließenden Verschweißen von elektrischen Leitern, insbesondere zur Herstellung von Durchgangs- oder Endknoten von Litzen, umfassend eine Ultraschallschwingungen erzeugende Sonotrode (20), von der ein Abschnitt eine erste seitliche Begrenzungsfläche (12) eines in Höhe und Breite verstellbaren, stirnseitig offenen Verdichtungsraums ist, dessen übrige Begrenzungsflächen (14, 16, 18) Abschnitte einer mehrteiligen Gegenelektrode (22) sind, wobei die Gegenelektrode ein erstes zu dem Sonotrodenabschnitt verstellbares, eine in etwa senkrecht zu dem Sonotrodenabschnitt verlaufende zweite Begrenzungsfläche (14) bildendes erstes Teil (24) sowie ein parallel zu der zweiten Begrenzungsfläche verschiebbares, eine dritte Begrenzungsfläche (16) bildendes zweites Teil (26) umfaßt, von dem ein eine in etwa parallel zu dem Sonotrodenabschnitt verlaufende vierte Begrenzungsfläche (18) bildender verschiebbarer Abschnitt (28) wie Nase ausgeht, der zumindest während des Kompaktierens und des Verschweißens an dem ersten Teil der Gegenelektrode anliegt oder nahezu anliegt, wobei zumindest während des Kompaktierens das erste und das zweite Teil eine zwangsgekoppelte Bewegung ausüben,
**dadurch gekennzeichnet,**
daß das erste und das zweite Teil (24, 26) der Gegenelektrode (22) über einen gemeinsamen Antrieb (62, 64) zwangsgekoppelt verstellbar sind, daß das zweite Teil (26) mit dem Antrieb verbunden und über ein Federelement (70) zu einem in Verstelleinrichtung des zweiten Teils eine Ablaufflläche (72, 88, 90, 92, 94, 98) aufweisenden Element (68) beabstandet ist, an der ein Arm eines mit dem ersten Teil (24) verbundenen und um eine ortsfeste Achse (76) verschwenkbaren Hebels (78) anliegt, daß während des Kompaktierens das zweite Teil der Gegenelektrode zusammen mit dem die Ablauffläche aufweisenden Element bei gleichzeitigem Verschwenken des Hebels über den Antrieb verstellbar ist und daß in dem Schwenkweg des verstellbaren Hebels ein Anschlag (104, 106) derart angeordnet ist, daß ein weiteres Verschwenken unterbunden und bei weiterhin wirkendem Antrieb das zweite Teil die zur Beabstandung von dem Federelement (70) hervorgerufene Kraft überwunden und das zweite Teil gegenüber dem Element verstellbar ist.

## Claims

1. The invention relates to a method for compaction and subsequent welding of electric conductors, in particular for manufacturing through-type or end nodes of strands using ultrasound in a compaction area (10) adaptable to the conductors and adjustable in height (h) and width (b), with said conductors to be welded first being compacted and then welded,
**wherein**
regardless of the cross-section of said conductors to be welded the latter are compacted to a cross-section in which said compaction area (10) has a given height/width ratio, and wherein welding parameters necessary for welding said conductors are applied depending on the actual height or width or at least one other characteristic quantity of said compaction area.

2. A method according to Claim 1,
**wherein**
after completion of compaction said compaction area (10) is reduced vertically to the sonotrode area (12) emitting ultrasound and limiting said compaction area.

3. A method according to Claim 1 or Claim 2,
**wherein**
compaction is ended at a contact force fixed regardless of the cross-section of said conductors to be welded.

4. A method for welding electric conductors by means of ultrasound, employing a compaction area (10) adjustable in height (h) and width (b) and accommodating the conductors, by which compaction area a limiting surface is formed by a sonotrode section of an ultrasonic welding jig,
wherein said method comprises
the following process steps:
- insertion of said conductors to be welded into said compaction area (10),
- compaction of said conductors in said compaction area up to a preset contact force with simultaneous alteration of said compaction area on the basis of a fixed height/width ratio,
- determination of the height (h) or width (b) or at least of another characteristic quantity of said compaction area after completion of the compaction process,
- calling up of filed welding parameters based on the height or width cr characteristic quantity of said compaction area,
- welding of said compacted conductors with simultaneous alteration of said compaction area exclusively in the direction of said sonotrode section or in the height and width of said compaction area, and
- removal of said conductors.

5. A method according to Claim 4,
**wherein**
the actual welding parameters are recorded.

6. A device for compaction and subsequent welding of electric conductors, in particular for manufacturing through-type and end nodes of strands, comprising a sonotrode (20) generating ultrasonic vibrations, of which one section is a first lateral limiting surface (12) of a compaction area (10) adjustable in height and width, preferably rectangular in cross-section and open at the end, the other limiting surfaces (14 16, 18) of said compaction area are sections of a multi-part counter-electrode (22), where said counter-electrode comprises a first part (24) movable to said sonotrode section and forming a second limiting surface (14) approximately vertical to said sonotrode section, and a second part (26) movable parallel to said second limiting surface and forming a third limiting surface (16), from which part extends a movable section (28) such as a nose forming a fourth limiting surface (18) running approximately parallel to said sonotrode section, and contacting or almost contacting said first part of said counter-electrode at least during compaction and welding, and where said first part and said second part performs a positively coupled movement during compaction,
**wherein**
said first part (24) and said second part (26) of said counter-electrode (22) are positively coupled such that during compaction of said conductors the height (h) and the width (b) of said compaction area (10) are in a preset ratio to one another, and wherein after completion of compaction said first part is uncoupled from said second part such that one of said parts is adjustable alone during welding, with the distance between points of two opposite limiting surfaces (12, 18; 14, 16) of said compaction area (10) being measurable before the start of welding.

7. A device according to Claim 6,
**wherein**
said height (h) and/or said width (b) or other measuring points of said compaction area (10) that are adjustable in relation to one another are measurable in particular by a travel pickup,

8. A device according to Claim 6 or Claim 7,
**wherein**
said first and second parts (24, 26) of said counter-electrode (22) are drivable separately or by a common drive unit (62).

9. A device according to Claim 8,
**wherein**
the movement (S1) of one of said parts (26, 24) of said counter-electrode (22) acts on the other part (24, 26) in order to move the latter positively (S2), said movement being transmittable.

10. A device according to at least one of the preceding claims,
**wherein**
said movement (S1) of the one part (26) is transmittable via a lever (36) whose one leg (39) acts as a stop for the movement of said other part (24).

11. A device according to Claim 10,
**wherein**
said lever (36) has the form of an unequal-sided 'U' whose swivel axis (1, 2, 3) passes through its transverse leg (38).

12. A device according to at least one ofthe preceding claims,
**wherein**
said parts (24, 26) of said counter-electrode 22) are pneumatically driven, and one of said parts is movable up against said leg (39) of said lever (36) acting as a stop.

13. A device according to at least one of the preceding claims,
**wherein**
aid first part (24) presses non-positively on the movable section (28) extending from said second part (26) and subjected to force in the direction of said first part, said section being in turn movable along a curved projection (30) such that when the distance between the limiting surface (12) formed by the sonotrode and the opposite limiting surface (18) is reduced during compaction of said conductors the distance between the remaining side faces (14, 16) is proportionately reducible and vice versa.

14. A device for compaction and subsequent welding of electric conductors, in particular for manufacturing through-type and end nodes of strands, comprising a sonotrode (20) generating ultrasonic vibrations, of which one section is a first lateral limiting surface (12) of a compaction area adjustable in height and width and open at the end, the other limiting surfaces (14 16, 18) of said compaction area are sections of a multi-part counter-electrode (22), where said counter-electrode comprises a first part movable approximately parallel to said sonotrode section and forming a second limiting surface (14) approximately vertical to said sonotrode section, and a second part (26) movable parallel to said second limiting surface and forming a third limiting surface (16), from which part extends a movable section (28) such as a nose forming a fourth limiting surface (18) running approximately parallel to said sonotrode section, and contacting or almost contacting said first part of said counter-electrode at least during compaction and welding, and where said first part and said second part perform a positively coupled movement during compaction,
**wherein**
said first and second parts (24, 26) of said counter-electrode (22) are positively coupled by a common drive unit (62, 64), wherein said second part (26) is connected to said drive unit and maintained by a spring element (70) at a distance from an element (68) having a run-off face (72, 88, 90, 92, 94, 98) in the adjustment direction of said second part, against which run-off surface presses an arm of a lever (78) connected to said first part (24) and swivelable about a stationary axis (76), where during compaction said second part of said counter-electrode is adjustable using said drive unit together with said element having said run-off surface while simultaneously swiveling said lever, and where upon reaching a presettable contact force onto said conductors present in said compaction area (10) the force generated by said spring element to maintain the distance is overcome and said second part is adjustable in relation to said element.

15. A device according to Claim 14 at least,
**wherein**
said element (68) having said run-off surface (72) is a taper or curved segment (88, 90, 92, 94, 98) running in the direction of the adjustment travel (Sl) of said second part (26) of said counter-electrode (22), said curved segment having a concave or convex form or a combination of these.

16. A device according to at least one of the preceding claims,
**wherein**
said drive unit (62) comprises a pressure cylinder whose piston rod passes through said element (68) having said ramp-like surface (72) and is connected to said second part (26) of said counter-electrode (22).

17. A device according to at least one of the preceding claims,
**wherein**
said spring element (70) encloses said piston rod (64).

18. A device for compaction and subsequent welding of electric conductors, in particular for manufacturing through-type and end nodes of strands, comprising a sonotrode (20) generating ultrasonic vibrations, of which one section is a first lateral limiting surface (12) of a compaction area adjustable in height and width and open at the end, the other limiting surfaces (14 16, 18) of said compaction area are sections of a multi-part counter-electrode (22), where said counter-electrode comprises a first part movable approximately parallel to said sonotrode section and forming a second limiting surface (14) approximately vertical to said sonotrode section, and a second part (26) movable parallel to said second limiting surface and forming a third limiting surface (16), from which part extends a movable section (28) such as a nose forming a fourth limiting surface (18) running approximately parallel to said sonotrode section, and contacting or almost contacting said first part of said counter-electrode at least during compaction and welding, and where said first part and said second part perform a positively coupled movement during compaction,
**wherein**
said first and second parts (24, 26) of said counter-electrode (22) are positively coupled by a common drive unit (62, 64), wherein said second part (26) has a run-off surface (72, 88, 90, 92, 94, 98) in its adjustment direction and is connected to said drive unit, wherein an arm of a lever (78) connected to said first part (24) and swivelable about a stationary axis (76) presses against said run-off surface, wherein during compaction said second part of said counter-electrode is adjustable while simultaneously swiveling the drive unit, and wherein upon reaching a presettable contact force onto said conductors present in said compaction area (10) said first part of said counter-electrode is uncoupled from further swiveling of said lever and is lockable.

19. A device for compaction and subsequent welding of electric conductors, in particular for manufacturing through-type and end nodes of strands, comprising a sonotrode (20) generating ultrasonic vibrations, of which one section is a first lateral limiting surface (12) of a compaction area adjustable in height and width and open at the end, the other limiting surfaces (14 16, 18) of said compaction area are sections of a multi-part counter-electrode (22), where said counter-electrode comprises a first part movable approximately parallel to said sonotrode section and forming a second limiting surface (14) approximately vertical to said sonotrode section, and a second part (26) movable parallel to said second limiting surface and forming a third limiting surface (16), from which part extends a movable section (28) such as a nose forming a fourth limiting surface (18) running approximately parallel to said sonotrode section, and contacting or almost contacting said first part of said counter-electrode at least during compaction and welding, and where said first part and said second part perform a positively coupled movement during compaction,
**wherein**
said first and second parts (24, 26) of said counter-electrode (22) are positively coupled by a common drive unit (62, 64), wherein said second part (26) is connected to said drive unit (26) and maintained by a spring element (70) at a distance from an element (68) having a run-off face (72, 88, 90, 92, 94, 98) in the adjustment direction of said second part, against which run-off surface presses an arm of a lever (78) connected to said first part (24) and swivelable about a stationary axis (76), herein during compaction said second part of said counter-electrode is adjustable using said drive unit together with said element having said run-off surface while simultaneously swiveling said lever, and wherein in the swivel travel of said adjustable lever a stop (104, 106) is disposed such that further swiveling is prevented and with the drive unit continuing to act said second part overcomes the force generated by said spring element (70) to maintain the distance and said second part is adjustable in relation to said element.

## Revendications

1. Procédé pour compacter, puis souder des conducteurs électriques notamment pour réaliser des passages ou des noeuds d'extrémité de cordon par ultrasons dans un volume de compression (10), adapté aux conducteurs, de hauteur (h) et de largeur (b) réglables, les conducteurs à souder étant tout d'abord compactés, puis soudés,
selon lequel
indépendamment de la section des conducteurs à souder, ceux-ci sont compactés à une section pour laquelle la chambre de compactage (10) présente un rapport hauteur/largeur prédéterminé et
en fonction de la hauteur et de la largeur effectives ou au moins d'une autre grandeur caractéristique de la chambre de compression, on applique les paramètres de soudage nécessaires pour souder les conducteurs.

2. Procédé selon la revendication 1,
caractérisé en ce qu'
à la fin du compactage, on diminue la chambre de compression (10) perpendiculairement à la surface (12) de la sonotrode qui délimite la chambre de compression et fournit les ultrasons.

3. Procédé selon la revendication 1 ou 2,
caractérisé en ce que
le compactage se termine à une pression de compactage fixée indépendamment de la section des conducteurs à souder.

4. Procédé de soudage de conducteurs électriques avec des ultrasons en utilisant une chambre de compression (10), de hauteur (h) et de largeur (b) réglables, recevant les conducteurs, l'une des surfaces (12) délimitant la chambre étant constituée par un segment de la sonotrode d'un dispositif de soudage à ultrasons,
selon lequel le procédé se compose des étapes suivantes :
• mise en place des conducteurs à souder dans la chambre de compression (10),
• compactage des conducteurs dans la chambre de compression jusqu'à une pression donnée avec modification simultanée de la chambre de compression sur la base d'un rapport hauteur/largeur donné,
• détermination de la hauteur (h) ou de la largeur (b) ou d'au moins une autre grandeur caractéristique de la chambre de compression après le compactage,
• appel des paramètres de soudage enregistrés en s'appuyant sur la hauteur ou la largeur ou les grandeurs caractéristiques de la chambre de compression,
• soudage des conducteurs à compacter avec modification simultanée de la chambre de compression uniquement en direction du segment de la sonotrode ou en hauteur et en largeur de la chambre de compression, et
• enlèvement des conducteurs soudés.

5. Procédé selon la revendication 4,
caractérisé en ce que
les paramètres de soudage effectifs sont enregistrés.

6. Dispositif de compactage, puis de soudage de conducteurs électriques notamment pour réaliser des passages ou des noeuds d'extrémité de cordon, comprenant :
• une sonotrode (20) générant des ultrasons, dont un segment constitue une surface limite latérale (12) d'une chambre de compression de hauteur et de largeur réglables, de section de préférence rectangulaire et dont la face frontale est ouverte, les autres surfaces limites (14, 16, 18) de cette chambre étant les segments d'une contre-électrode (22) en plusieurs parties, la contre-électrode ayant une première partie (24) coulissant sensiblement parallèlement au segment de la sonotrode, et constituant une seconde surface limite (14) sensiblement perpendiculaire au segment de la sonotrode, ainsi qu'une seconde partie (26) coulissant parallèlement à la seconde surface limite et constituant une troisième surface limite (16) se poursuivant par un segment (28) tel qu'un bec coulissant, formant une quatrième surface limite (18) sensiblement parallèle au segment de la sonotrode, ce segment (28) étant appliqué ou pratiquement appliqué contre la première partie de la contre-électrode au moins pendant le compactage et le soudage, et pendant le compactage, la première et la seconde partie exercent un mouvement couplé de force,
caractérisé en ce que
• la première partie (24) et la seconde partie (26) de la contre-électrode (22) sont couplées de force pour que pendant le compactage des conducteurs, la hauteur (h) et la largeur (b) de la chambre de compression (10) se trouvent dans un rapport fixe prédéterminé, et
• à la fin du compactage, la première partie est découplée de la seconde partie pour que l'une des parties soit réglable isolément pendant le soudage,
• et avant le début du soudage, on détecte la distance entre les points de deux surfaces limites opposées (12, 18 ; 14, 16) de la chambre de compression (10).

7. Dispositif selon la revendication 6,
caractérisé en ce que
la hauteur (h) et/ou la largeur (b) ou autres points de mesure réglables entre eux pendant le compactage de la chambre de compression (10) peuvent être détectés notamment par un capteur de course.

8. Dispositif selon la revendication 6 ou 7,
caractérisé en ce que
la première et la seconde partie (24, 26) de la contre-électrode (22) sont entraînées séparément ou par un dispositif d'entraînement commun (62).

9. Dispositif selon la revendication 8,
caractérisé en ce que
le mouvement (S1) de l'une des parties (26, 24) de la contre-électrode (22) agit comme par transmission sur l'autre partie (24, 26) pour en assurer le mouvement forcé (S2).

10. Dispositif selon au moins l'une des revendications précédentes,
caractérisé en ce que
le mouvement (S1) d'une partie (26) est transmis par le levier (36) dont une branche (39) sert de butée au mouvement de l'autre partie (24).

11. Dispositif selon la revendication 10,
caractérisé en ce que
le levier (36) a une forme de U dont les branches sont inégales et l'axe de pivotement (1, 2, 3) traverse la branche transversale (38).

12. Dispositif selon l'une quelconque des revendications précédentes,
caractérisé en ce que
les parties (24, 26) de la contre-électrode (22) sont entraînées pneumatiquement, l'une de celles-ci pouvant être placée contre la branche (39) du levier (36), cette branche servant de butée.

13. Dispositif selon au moins l'une des revendications précédentes,
caractérisé en ce que
la première partie (24) s'appuie par une liaison par la force contre le segment (28) partant de la seconde partie (26) et coulissant en direction de la première partie sous l'effet d'une force, ce segment (28) coulissant lui-même le long d'une saillie en forme de courbe (30) pour que la réduction de la distance entre les surfaces limites (12) formées par la sonotrode (20) et la surface limite (18), opposée, pendant le compactage des conducteurs, soit telle que la distance des surfaces latérales (14, 16), restant, diminue proportionnellement et inversement.

14. Dispositif de compactage, puis de soudage de conducteurs électriques notamment pour réaliser des passages et des nceuds d'extrémité de cordon, comprenant une sonotrode (20) générant des ultrasons, dont un segment constitue une première surface limite latérale (12) d'une chambre de compression ouverte frontalement, et de hauteur et de largeur réglables, les autres surfaces limites (14, 16, 18) étant des segments d'une contre-électrode (22) en plusieurs parties, la contre-électrode comprenant une première partie (24) formant la seconde surface limite (14), réglable par rapport au segment de sonotrode et qui est sensiblement perpendiculaire à ce segment de sonotrode, ainsi qu'une seconde partie (26) coulissant parallèlement à la seconde surface limite (14) et constituant une troisième surface limite (16), seconde partie qui se poursuit par un segment (28) tel qu'un bec, coulissant sensiblement parallèlement au segment de sonotrode et constituant la quatrième surface limite (18), ce segment s'appliquant totalement ou pratiquement contre la première partie de la contre-électrode pendant le compactage et le soudage, et la première et la seconde partie exercent un mouvement couplé, de force, au moins pendant le compactage,
caractérisé en ce que
la première et la seconde partie (24, 26) de la contre-électrode (2) sont réglables de manière couplée, de force, par un entraînement commun (62, 64),
la seconde partie (26) étant reliée à l'entraînement et est distante par l'intermédiaire d'un élément à ressort (70) par rapport à un élément (68) ayant une surface de déroulement (72, 88, 90, 92, 94, 98), dans l'installation de réglage de la seconde partie, un bras y étant relié à la première partie (24) et s'appuyant contre un levier (78) pivotant autour d'un axe fixe (76), et
pendant le compactage, la seconde partie de la contre-électrode ainsi que l'élément qui présente la surface de déroulement, est réglable par le moyen d'entraînement avec basculement simultané du levier et après avoir atteint une force d'application donnée sur les conducteurs dans la chambre de compression (10), on dépasse la force créée par l'élément à ressort pour assurer l'écartement et la seconde partie peut se déplacer par rapport à l'élément.

15. Dispositif selon au moins la revendication 14,
caractérisé en ce que
l'élément (68) qui comporte la surface de déroulement (72) est un coin ou un segment de courbe (88, 90, 92, 94, 98) dans la direction de la course de réglage (S1) de la seconde partie (26) de l'axe de contre-électrode (22), le segment de courbe ayant une forme concave ou convexe ou une combinaison de celles-ci.

16. Dispositif selon au moins l'une des revendications précédentes,
caractérisé en ce que
le moyen d'entraînement (62) comprend un vérin dont la tige de piston traverse l'élément (68) présentant la surface (72) en forme de rampe en étant reliée à une partie (26) de la contre-électrode (22).

17. Dispositif selon au moins l'une des revendications précédentes,
caractérisé en ce que
l'élément à ressort (70) entoure la tige de piston (64).

18. Dispositif de compactage, puis de soudage de conducteurs électriques notamment pour réaliser des passages et des noeuds d'extrémité de cordon, comprenant une sonotrode (20) générant des ultrasons, dont un segment constitue une première surface limite latérale (12) d'une chambre de compression ouverte frontalement, et de hauteur et de largeur réglables, les autres surfaces limites (14, 16, 18) étant des segments d'une contre-électrode (22) en plusieurs parties, la contre-électrode comprenant une première partie (24) formant la seconde surface limite (14), réglable par rapport au segment de sonotrode et qui est sensiblement perpendiculaire à ce segment de sonotrode, ainsi qu'une seconde partie (26) coulissant parallèlement à la seconde surface limite (14) et constituant une troisième surface limite (16), seconde partie qui se poursuit par un segment (28) tel qu'un bec, coulissant sensiblement parallèlement au segment de sonotrode et constituant la quatrième surface limite (18), ce segment s'appliquant totalement ou pratiquement contre la première partie de la contre-électrode pendant le compactage et le soudage, et la première et la seconde partie exercent un mouvement couplé, de force, au moins pendant le compactage,
caractérisé en ce que
la première et la seconde partie (24, 25) de la contre-électrode (22) sont réglables avec couplage forcé par un entraînement commun (62, 64),
la seconde partie (26) ayant une surface de déroulement (72, 88, 90, 92, 94, 98) passant dans sa direction de réglage est reliée au moyen d'entraînement, et
un bras d'un levier (78) relié à la première partie (24) et pivotant autour d'un axe fixe (76) s'appuie contre la surface de déroulement,
pendant le compactage, la seconde partie de la contre-électrode est réglable par le moyen d'entraînement pendant le pivotement simultané du levier et après avoir atteint une pression prédéterminée exercée sur les conducteurs se trouvant dans la chambre de compression (10), la première partie de la contre-électrode est découplée de la poursuite du basculement du levier et se bloque.

19. Dispositif de compactage, puis de soudage de conducteurs électriques notamment pour réaliser des passages et des noeuds d'extrémité de cordon, comprenant une sonotrode (20) générant des ultrasons, dont un segment constitue une première surface limite latérale (12) d'une chambre de compression ouverte frontalement, et de hauteur et de largeur réglables, les autres surfaces limites (14, 16, 18) étant des segments d'une contre-électrode (22) en plusieurs parties, la contre-électrode comprenant une première partie (24) formant la seconde surface limite (14), réglable par rapport au segment de sonotrode et qui est sensiblement perpendiculaire à ce segment de sonotrode, ainsi qu'une seconde partie (26) coulissant parallèlement à la seconde surface limite (14) et constituant une troisième surface limite (16), seconde partie qui se poursuit par un segment (28) tel qu'un bec, coulissant sensiblement parallèlement au segment de sonotrode et constituant la quatrième surface limite (18), ce segment s'appliquant totalement ou pratiquement contre la première partie de la contre-électrode pendant le compactage et le soudage, et la première et la seconde partie exercent un mouvement couplé, de force, au moins pendant le compactage,
caractérisé en ce que
la première et la seconde partie (24, 26) de la contre-électrode (22) sont réglables avec couplage forcé par un moyen d'entraînement commun (62, 64),
la seconde partie (26) est reliée à l'entraînement et par un élément à ressort (70) est distante dans l'installation de réglage de la seconde partie, d'un élément (68) ayant une surface de déroulement (72, 88, 90, 92, 94, 98) contre laquelle s'appuie un bras d'un levier (78) relié à la première partie (24) et pivotant autour d'un axe fixe (76), pendant le compactage, la seconde partie de la contre-électrode et l'élément présentant la surface de déroulement, avec basculement simultané du levier, se règlent par le moyen d'entraînement, et
dans la course de pivotement du levier réglable, il y a une butée (104, 106) qui interdit toute poursuite du pivotement et si l'entraînement continue d'agir, la seconde partie dépasse la force engendrée par le ressort (70) servant à assurer l'écartement et déplace la seconde partie par rapport à l'élément.
